# FASCICULE DE BREVET EUROPEEN

(11) **EP 1 523 422 B1**
(45) Date de publication et mention de la délivrance du brevet: **05.07.2006**
(21) Numéro de dépôt: 03748184.3
(22) Date de dépôt: 26.06.2003
(51) Int. Cl.: B60J 7/20

(54) **DISPOSITIF DE PROTECTION D OBJETS DISPOSES DANS LE COFFRE ARRIERE D UN VEHICULE AUTOMOBILE**
SCHUTZVORRICHTUNG FÜR GEGENSTÄNDE, DIE SICH IM KOFFERRAUM EINES KRAFTFAHRZEUGES BEFINDEN
DEVICE FOR PROTECTING OBJECTS STORED IN A MOTOR VEHICLE REAR DECK

(30) Priorité: 19.07.2002 FR 0209220
(43) Date de publication de la demande: 20.04.2005
(73) Titulaire: Société Européenne de Brevets Automobiles, 75011 Paris (FR)
(72) Inventeur: QUEVEAU, Gérard, F-79140 Le Pin (FR); QUEVEAU, Paul, F-79140 Montravers (FR); GUILLEZ, Jean-Marc, F-79140 Cirières (FR)
(74) Mandataire: Pichat, Thierry
(86) Numéro de dépôt international: PCT/FR2003/001980
(87) Numéro de publication internationale: WO 2004/009386

(56) Documents cités:
- EP-A- 0 860 312
- DE-A- 19 834 850
- DE-C- 19 542 906

## Description

La présente invention concerne un dispositif de protection d'objets disposés dans le coffre arrière d'un véhicule automobile ayant un toit repliable dans le coffre.

On connaît un dispositif de protection d'objets disposés dans le coffre arrière d'un véhicule automobile ayant un toit repliable mobile entre une position déployée dans laquelle il recouvre l'habitacle du véhicule, et une position pliée rangée dans laquelle il est rangé et escamoté dans le coffre fermé par un capot. Un tel dispositif, voir, par exemple, le document DE 198 34 850, test du type comportant un panneau formant la limite verticale entre une région protégée du coffre adaptée à recevoir les objets et accessible quand le coffre est ouvert de l'arrière vers l'avant, et une seconde région du coffre adaptée à recevoir le toit en position pliée rangée et située au-dessus de la région protégée, le panneau étant déplaçable entre au moins une position de protection basse dans laquelle la région protégée occupe un premier volume qui est disponible quand le coffre est fermé et le toit est dans sa position pliée rangée, et une position de protection haute dans laquelle la région protégée occupe un second volume qui est disponible quand le coffre est fermé et le toit est dans sa position déployée, des premiers et des seconds moyens de verrouillage étant adaptés à verrouiller le panneau dans sa position de protection basse et dans sa position de protection haute respectivement, le panneau en position de protection basse étant adapté à coopérer avec un premier capteur de façon à autoriser le pliage du toit.

Un tel dispositif est décrit, par exemple, dans la demande de brevet français 2 796 901. Dans cette demande antérieure, le coffre arrière est fermé, d'une part, par un capot s'ouvrant de l'avant vers l'arrière afin de permettre le passage du toit lors de son mouvement entre sa position pliée rangée et sa position déployée, et, d'autre part, par une porte arrière s'ouvrant de l'arrière vers l'avant afin de permettre l'introduction des objets. Dans cette demande antérieure, le mouvement du toit et celui du capot sont commandés par des actionneurs uniquement quand le panneau est dans sa position de protection basse, ce qui assure la protection des objets. Et le mouvement de la porte arrière est commandé manuellement, la présence de l'utilisateur assurant la protection des objets.

Toutefois, il existe des véhicules dont la fermeture et l'ouverture du coffre arrière est entièrement automatisée : soit, comme dans la demande de brevet citée ci-dessus, le coffre comporte un capot et une porte arrière dont les mouvements respectifs sont commandés par des actionneurs, soit le coffre comporte un capot commandé par un actionneur et articulé de façon à pouvoir être ouvert aussi bien de l'avant vers l'arrière que de l'arrière vers l'avant.

De ce fait, les dispositifs de protection d'objets de l'art antérieur ne permettent pas de protéger les objets lors de la fermeture automatique du coffre.

Le but de la présente invention est de remédier à l'inconvénient précité, et de proposer un dispositif de protection d'objets qui soit simple, fiable, économique, d'utilisation aisée, et capable d'assurer une réelle protection des bagages disposés à l'intérieur du coffre arrière du véhicule quelque soit le mouvement de fermeture de l'élément fermant le coffre.

Suivant la présente invention, la coopération du panneau avec le premier capteur est telle que, quand le panneau est situé plus haut que la position de protection basse, le toit ne peut être plié, et la coopération du panneau avec un second capteur est telle que, quand le panneau est situé plus haut que la position de protection haute, le coffre ne peut être fermé.

La coopération du panneau avec l'un ou l'autre des deux capteurs en fonction de sa position permet de protéger efficacement et simplement tout objet de tout endommagement pouvant être causé aussi bien par le pliage du toit que par la fermeture du coffre.

D'autres particularités et avantages de la présente invention apparaîtront dans la description détaillée ci-après

Aux dessins annexés donnés uniquement à titre d'exemples non limitatifs :
- la figure 1 représente une vue schématique en coupe transversale du coffre arrière d'un véhicule muni d'un dispositif de protection d'objets ;
- la figure 2 est une vue schématique partielle d'un dispositif de protection d'objets selon la présente invention, le panneau étant en position de protection basse ;
- la figure 3 est une vue semblable à la figure 2, le panneau étant en position de protection haute ;
- la figure 4 est une vue en coupe longitudinale du coffre arrière d'un véhicule muni d'un dispositif conforme à la présente invention ;
- la figure 5 est une vue en perspective d'un dispositif conforme à la présente invention ; et
- la figure 6 est une vue semblable à la figure 4 d'un dispositif selon un autre mode de réalisation.

Un véhicule automobile comporte un toit 1 repliable qui est mobile entre une position déployée dans laquelle il recouvre l'habitacle du véhicule, et une position pliée rangée dans laquelle il est rangé et escamoté dans le coffre arrière 2 du véhicule.

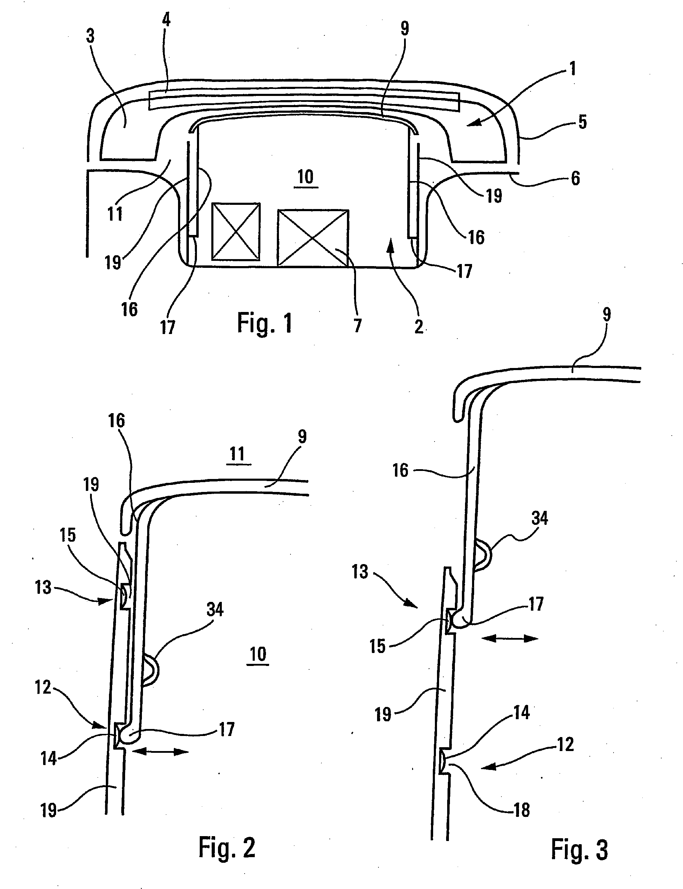

Dans l'exemple illustré aux figures 1 à 6, le toit 1 comporte aux moins deux éléments de toit, un élément avant de toit 3 et un élément arrière de toit 4, adaptés à être repliés sensiblement à l'horizontale dans la partie supérieure du coffre 2.

Le coffre arrière 2 est muni d'un capot 5 qui est articulé à la carrosserie 6 de façon à pouvoir s'ouvrir d'une part de l'arrière vers l'avant afin de permettre l'introduction d'objets 7 dans le coffre 2, et, d'autre part, de l'avant vers l'arrière afin de permettre le passage du toit 1 pliable.

Le véhicule est muni d'un dispositif de protection 8 des objets 7 disposés dans le coffre 2. Le dispositif de protection 8 comporte un panneau 9 qui forme la limite verticale entre une région protégée 10 du coffre 2 une seconde région 11 du coffre 2 située au dessus de la région protégée 10.

La région protégée 10 est adaptée à recevoir les objets 7 et elle est accessible quand le capot 5 du coffre 2 est ouvert de l'arrière vers l'avant. La seconde région 11 est adaptée à recevoir le toit 1 en position pliée rangée.

Le panneau 9 est rigide et il est déplaçable au moins entre une position de protection basse et une position de protection haute.

Quand le panneau 9 est dans sa position de protection basse, la région protégée 10 occupe un premier volume qui est disponible quand le capot 5 ferme le coffre 2, le toit 1 étant par ailleurs dans sa position pliée rangée.

Quand le panneau 9 est dans sa position de protection haute, la région protégée 10 occupe un second volume qui est disponible quand le capot 5 ferme le coffre 2, le toit 1 étant par ailleurs dans sa position déployée.

Des premiers moyens de verrouillage 12 sont adaptés à verrouiller le panneau 9 dans sa position de protection basse, et des seconds moyens de verrouillage 13 sont adaptés à verrouiller le panneau 9 dans sa position de protection haute.

Par ailleurs, le panneau 9, en position de protection basse, est adapté à coopérer avec un premier capteur 14 de façon à autoriser le pliage du toit 1 et la fermeture du capot 5.

Selon l'invention, la coopération du panneau 9 avec le premier capteur 14 est telle que, quand le panneau 9 est situé plus haut que la position de protection basse, le toit 1 ne peut être plié, et la coopération du panneau 9 avec un second capteur 15 est telle que quand le panneau 9, est situé plus haut que la position de protection haute, le coffre 2 ne peut être fermé, des actionneurs étant adaptés à commander l'ouverture et la fermeture automatique du coffre 2 et le pliage et le déploiement du toit 1. Bien évidemment, chacun des deux capteurs 14,15 est relié au circuit électrique auquel sont reliés les moyens de commande du mouvement du toit 1 et du capot 5.

Ainsi, selon l'invention, les objets 7 disposés dans la région protégée 10 ne peuvent être endommagés ni par le toit 1, ni par le capot 5, et, par la même occasion, le toit 1 ne peut être endommagé par les objets 7.

En effet, ni le toit 1 en position pliée rangée, ni le capot 5 en position fermée ne peuvent venir en contact avec le panneau 9 en position de protection basse du fait de la position géographique du panneau 9.

Et le capot 5 en position fermée ne peut venir en contact avec le panneau 9 en position de protection haute du fait de la position géographique du panneau 9.

Si le panneau 9 est situé plus haut que sa position de protection haute, le capot 5 ne peut pas être fermé. De même, si le panneau 9 est au-dessus de sa position de protection basse, le toit 1 ne peut pas être plié.

Ainsi, quelle que soit sa position, le panneau 9 est protégé de tout endommagement pouvant survenir suite à la manoeuvre du toit 1 ou du capot 5. Et, bien évidemment, il en est de même des objets 7 qui sont dans la région protégée 10 dont il forme la limite verticale supérieure. Par la même occasion, le toit 1 est protégé de tout contact avec les objets 7 qui pourraient l'endommager.

Comme on peut le voir aux figures 2 à 5, un bras 16 est fixé à chaque côté latéral du panneau 9 de façon mobile dans la direction transversale au véhicule.

Chacun des deux bras 16 comporte un ergot 17 qui fait saillie transversalement vers l'extérieur de la région protégée 10. Chaque ergot 17 est adapté à pénétrer dans une première ouverture 18 qui est réalisée dans un élément d'ancrage 19 solidaire de la carrosserie 6 et qui définit la position de protection basse, de façon à verrouiller le panneau 9 dans cette position.

Dans l'exemple illustré aux figures 2 à 5, chaque bras 16 s'étend vers le bas du coffre 2 et est fixé, par son extrémité supérieure, de façon flexible au panneau 9, chaque bras 16 étant sollicité en permanence en direction de l'élément d'ancrage 19 correspondant. Chaque ergot 17 est situé au niveau de l'extrémité inférieure du bras 16 correspondant. La flexibilité de la fixation du bras 16 au panneau 9 est suffisante pour conférer à l'ergot 17 correspondant une amplitude de mouvement suffisant pour qu'il puisse s'engager et se dégager de la première ouverture 18 de l'élément d'ancrage 19 correspondant. Chaque bras 16 comporte une poignée 34 servant de moyen de préhension permettant à l'utilisateur de fléchir le bras 16.

Comme on peut le voir à la figure 3, le premier capteur 14 est logé dans la première ouverture 18. Il est adapté à être actionné par l'ergot 17 quand ce dernier est dans la première ouverture 18 (figure 2).

Comme on peut le voir aux figures 2 à 5, chaque élément d'ancrage 19 comporte une deuxième ouverture 20 qui définit la position de protection haute, et dans laquelle l'ergot 17 correspondant est adapté à pénétrer de façon à verrouiller le panneau 9 dans cette position. Le second capteur 15 est logé dans la deuxième ouverture 20 et il est adapté à être actionné par l'ergot 17 quand ce dernier est dans la deuxième ouverture 20 (figure 3).

Par ailleurs, quand le capot 5 du coffre 2 est ouvert de l'arrière vers l'avant, le toit 1 étant par ailleurs dans sa position déployée, le panneau 9 peut être déplacé dans une position d'introduction haute située au-delà de la position de protection haute de façon à faciliter l'introduction des objets 7 dans la région protégée 10.

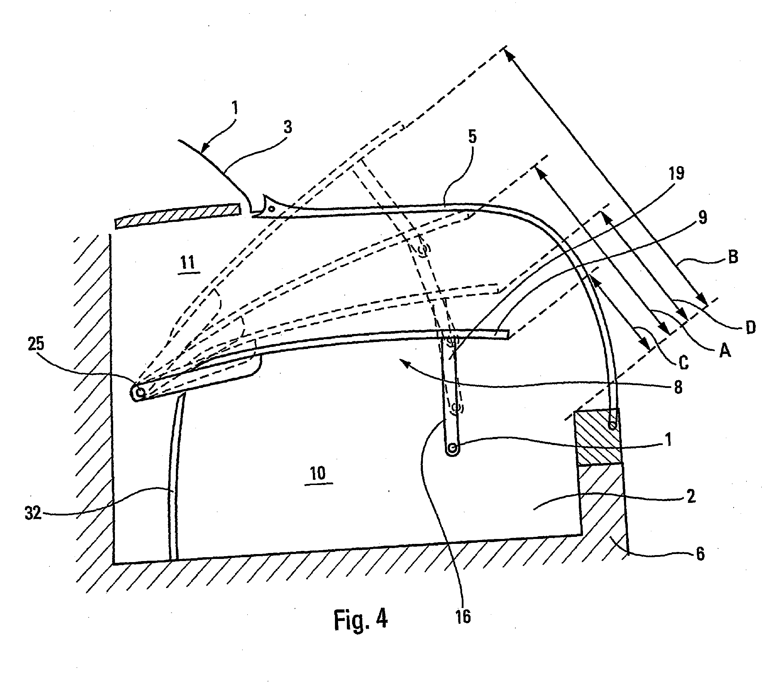

Ainsi, comme on peut le voir à la figure 4, la distance séparant le bord arrière du panneau 9 du bord arrière du coffre 2 s'en trouve augmenté (cf. la distance A quand le panneau 9 est dans sa position de protection haute et la distance B quand il est dans sa position d'introduction haute)

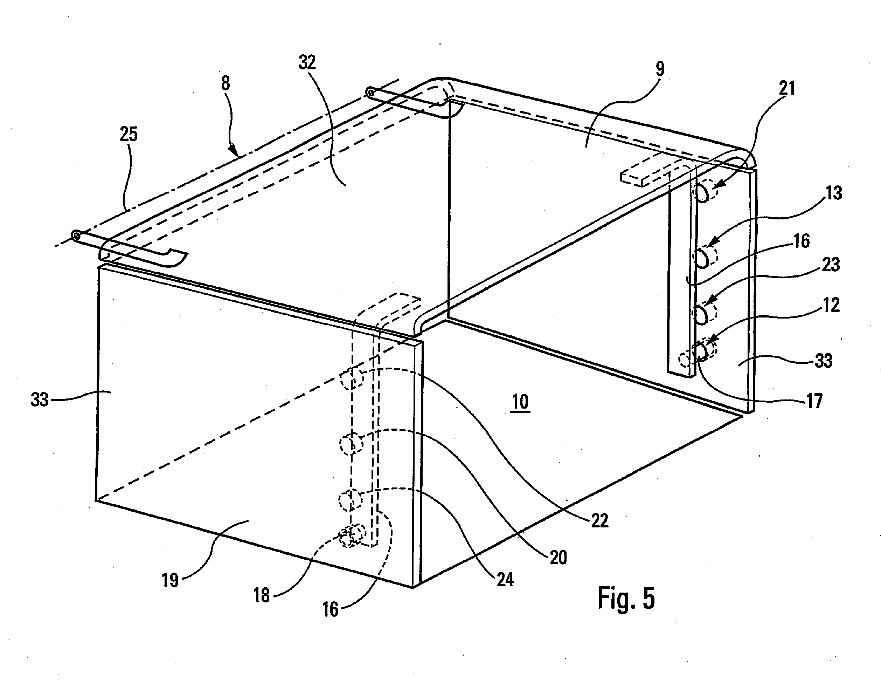

Avantageusement, des troisièmes moyens de verrouillage 21 sont adaptés à verrouiller le panneau 9 dans sa position d'introduction haute. Comme on peut le voir à la figure 5, chaque élément d'ancrage 19 comporte une troisième ouverture 22 qui définit la position d'introduction haute et dans laquelle l'ergot 17 correspondant est adapté à pénétrer de façon à verrouiller le panneau 9 dans cette position.

Bien évidemment tant que le panneau 9 n'est pas redescendu jusqu'au niveau de sa position de protection haute, le capot 5 ne peut pas être fermé. Et tant qu'il n'est pas redescendu jusqu'au niveau de sa position de protection basse, le toit 1 ne peut pas être plié.

Dans l'exemple illustré à la figure 4, le véhicule est muni d'un dispositif adapté à faciliter l'introduction des objets 7 sous le toit 1 (dispositif non illustré). Ce dispositif est adapté à entraîner le toit 1 de sa position plié rangée à une position pliée surélevée dans laquelle le coffre 2 est ouvert de l'arrière vers l'avant, le toit 1 faisant alors au moins partiellement saillie hors du coffre 2. Ainsi, quand le capot 5 du coffre 2 est ouvert de l'arrière vers l'avant, le toit 1 étant par ailleurs dans sa position pliée surélevée, le panneau 9 peut être déplacé dans une position d'introduction basse située au-delà de la position de protection basse de façon à faciliter l'introduction des objets 7 dans la région protégée 10.

Ainsi, comme on peut le voir à la figure 4, la distance séparant le bord arrière du panneau 9 du bord arrière du coffre 2 s'en trouve augmenté (cf. la distance C quand le panneau 9 est dans sa position de protection basse et la distance D quand il est dans sa position d'introduction basse)

Avantageusement, des quatrièmes moyens de verrouillage 23 sont adaptés à verrouiller le panneau 9 dans sa position d'introduction basse. Comme on peut le voir à la figure 5, chaque élément d'ancrage 19 comporte une quatrième ouverture 24 dans laquelle l'ergot 17 correspondant est adapté à pénétrer de façon à verrouiller le panneau 9 dans sa position d'introduction basse.

Bien évidemment tant que le panneau 9 n'a pas atteint sa position de protection basse, le toit 1 ne peut pas être abaissé et le capot 5 ne peut pas être fermé.

Dans cet exemple particulier, la conformation des moyens de verrouillages 12, 13, 21 et 23 est telle que le panneau 9 ne peut prendre que quatre positions stables.

Dans l'exemple illustré aux figures 4 et 5, le panneau 9 est monté mobile en rotation par rapport à la carrosserie 6: il est porté, au niveau de son extrémité avant, par un axe de rotation 25 est orienté dans la direction transversale du véhicule, et autour duquel il pivote.

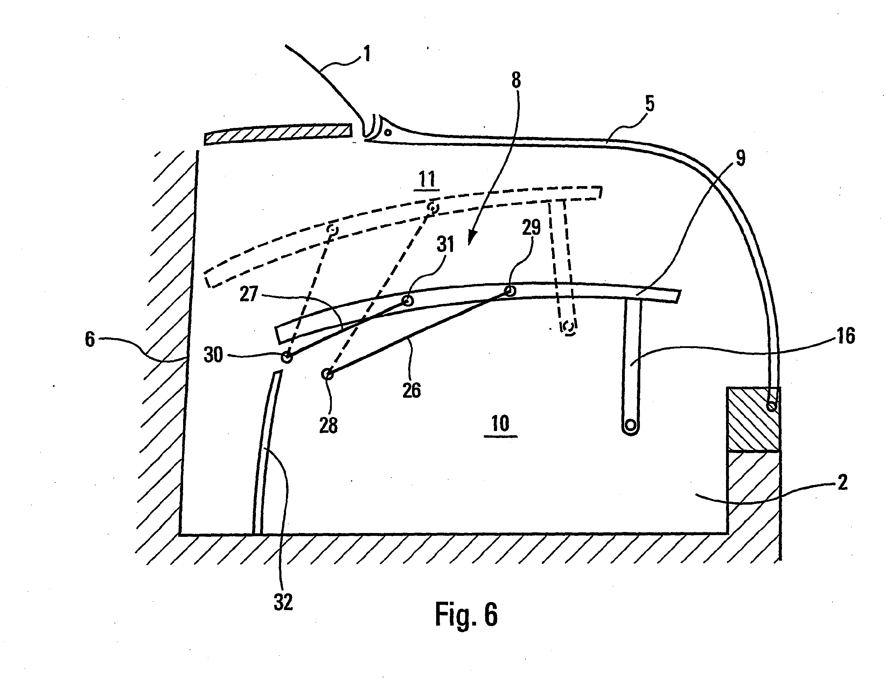

Dans l'exemple illustré à la figure 6 le panneau est monté de façon relié de façon mobile par rapport à la carrosserie par l'intermédiaire de deux paires de bras pivotant 26,27. La première paire de bras pivotant 26 est monté en rotation, au niveau d'une première extrémité, par rapport à la carrosserie 6, autour d'un premier axe de pivotement 28, et, au niveau d'une deuxième extrémité, par rapport au panneau 9 autour d'un second axe de pivotement 29. De même, la deuxième paire de bras pivotant 27 est monté en rotation, au niveau d'une première extrémité, par rapport à la carrosserie 6, autour d'un troisième axe de pivotement 30, et, au niveau d'une deuxième extrémité, par rapport au panneau 9 autour d'un quatrième axe de pivotement 31. Le panneau 9 est entraîné par la rotation des deux paires de bras pivotants 26,27 qui sont agencés de façon à former un parallèlogramme, chacun des quatre axes de pivotement 28,29,30,31 étant orienté dans la direction transversale du véhicule. Bien que non représenté à la figure 6, le panneau 9 peut prendre les positions de protection basse et haute et les positions d'introduction basse et haute.

De plus, préférence, afin d'améliorer la protection des objets 7, comme on peut le voir à la figure 5, le dispositif de protection 8 comprend une paroi de fond 32 qui s'étend de façon sensiblement verticale et limite la région de protection 10 en direction de l'avant du véhicule, et deux parois latérales 33 qui s'étendent de façon sensiblement verticale et limitent la région de protection 10 dans la direction transversale au véhicule. Dans le présent exemple, les panneaux latéraux constituent les moyens d'ancrage 19.

Bien évidemment, la présente invention n'est pas limitée au mode de réalisation décrit en détail ci-dessus.

Il serait aussi possible d'utiliser d'autres moyens pour rendre mobile l'ergot 7, pour articuler le panneau 9 par rapport à la carrosserie 6, pour verrouiller le panneau 9 dans une de ses positions. Il serait aussi possible que les moyens permettant l'articulation du panneau 9 comprennent des moyens rendant le panneau 9 stable quelle que soit sa position, les premier et deuxième capteurs étant alors disposés le long de la trajectoire du panneau, respectivement, sous la position de protection basse la plus haute, et entre la position de protection basse la plus haute et la position de protection haute la plus haute.

Il serait possible d'utiliser des moyens d'ancrage 19 indépendants des panneaux latéraux 33

## Revendications

1. Dispositif de protection (8) d'objets' (7) disposés dans le coffre arrière (2) d'un véhicule automobile ayant un toit (1) repliable mobile entre une position déployée dans laquelle il recouvre l'habitacle du véhicule, et une position pliée rangée dans laquelle il est rangé et escamoté dans le coffre (2) fermé par un capot (5), le dispositif (8) comportant un panneau (9) formant la limite verticale entre une région protégée (10) du coffre (2) adaptée à recevoir les objets (7) et accessible quand le coffre (2) est ouvert de l'arrière vers l'avant, et une seconde région (11) du coffre (2) adaptée à recevoir le toit (1) en position pliée rangée et située au-dessus de la région protégée (10), le panneau (9) étant déplaçable entre au moins une position de protection basse dans laquelle la région protégée (10) occupe un premier volume qui est disponible quand le coffre (2) est fermé et le toit (1) est dans sa position pliée rangée, et une position de protection haute dans laquelle la région protégée (10) occupe un second volume qui est disponible quand le coffre (2) est fermé et le toit (1) est dans sa position déployée, des premiers (12) et des seconds (13) moyens de verrouillage étant adaptés à verrouiller le panneau (9) dans sa position de protection basse et dans sa position de protection haute respectivement, le panneau (9) en position de protection basse étant adapté à coopérer avec un premier capteur (14) de façon à autoriser le pliage du toit (1), **caractérisé en ce que** la coopération du panneau (9) avec le premier capteur (14) est telle que, quand le panneau (9) est situé plus haut que la position de protection basse, le toit (1) ne peut être plié, et **en ce que** la coopération du panneau (9) avec un second capteur (15) est telle que, quand le panneau (9) est situé plus haut que la position de protection haute, le coffre (2) ne peut être fermé.

2. Dispositif (8) selon la revendication 1, **caractérisé en ce qu'**un bras (16) est fixé à chaque côté latéral du panneau (9) de façon mobile dans la direction transversale au véhicule, chaque bras (16) comportant un ergot (17) faisant saillie transversalement vers l'extérieur de la région protégée (10), un élément d' ancrage (19) solidaire de la carrosserie (6) comporte une première ouverture (18) dans laquelle est logé le premier capteur (14), l'ergot (17) étant adapté à pénétrer dans la première ouverture (18) de façon à verrouiller le panneau (9) dans sa position de protection basse et à actionner le premier capteur (14).

3. Dispositif selon la revendication 2, **caractérisé en ce que** chaque ergot (17) situé au niveau de l'extrémité inférieure du bras (16) correspondant qui s'étend vers le bas du coffre (2) et qui est fixé de façon flexible au panneau (9), est sollicité en permanence en direction de l'élément d'ancrage (19).

4. Dispositif selon la revendication 2 ou 3, **caractérisé en ce que** l'élément d'ancrage (19) comporte une deuxième ouverture (20) dans laquelle est logé le second capteur (15), l'ergot (17) étant adapté à pénétrer dans la deuxième ouverture (20) de façon à verrouiller le panneau (9) dans sa position de protection haute et à actionner le second capteur (15).

5. Dispositif de protection selon l'une des revendications 1 à 4, **caractérisé en ce que**, quand le toit (1) est dans sa position déployée et le coffre (2) est ouvert de l'arrière vers l'avant, le panneau (9) peut être déplacé dans une position d'introduction haute située au-delà de la position de protection haute de façon à faciliter l'introduction des bagages (7) dans la région protégée (10).

6. Dispositif de protection selon la revendication 5, **caractérisé en ce que** des troisièmes moyens de verrouillage (21) sont adaptés à verrouiller le panneau (9) dans sa position d'introduction haute.

7. Dispositif selon la revendication 6 dépendante de la revendication 2, **caractérisé en ce que** l'élément d'ancrage (19) comporte une troisième ouverture (22) dans laquelle l'ergot (17) est adapté à pénétrer de façon à verrouiller le panneau (9) dans sa position d'introduction haute.

8. Dispositif de protection selon l'une des revendications 1 à 7, le véhicule étant muni d'un dispositif adapté à faciliter l'introduction des objets (7) sous le toit (1) en l'entraînant de sa position plié rangée à une position pliée surélevée dans laquelle le coffre (2) est ouvert de l'arrière vers l'avant et le toit (1) fait au moins partiellement saillie hors du coffre(2), **caractérisé en ce que**, quand le toit (1) est dans sa position pliée surélevée et le coffre (2) est ouvert de l'arrière vers l'avant, le panneau (9) peut être déplacé dans une position d'introduction basse située au-delà de la position de protection basse de façon à faciliter l'introduction des bagages (7) dans la région protégée (10), la coopération du panneau (9) avec le premier capteur (14) étant telle que, quand le panneau (9) est situé plus haut que la position de protection basse, le toit (1) ne peut être abaissé et le capot (2) ne peut être fermé.

9. Dispositif selon la revendication 8, **caractérisé en ce que** des quatrièmes moyens de verrouillage (23) sont adaptés à verrouiller le panneau (9) dans sa position d'introduction basse.

10. Dispositif selon la revendication 9 dépendante de la revendication 2, **caractérisé en ce que** l'élément d'ancrage (19) comporte une quatrième ouverture (24) dans laquelle l'ergot (17) est adapté à pénétrer de façon à verrouiller le panneau (9) dans sa position d'introduction basse.

## Claims

1. Device (8) for protecting objects (7) placed inside the rear boot (2) of a motor vehicle bearing a foldaway roof (1) movable between a deployed position in which it covers the passenger compartment of the vehicle, and a folded, stored position in which it is stored and retracted in the boot (2) closed with a hood (5), the device (8) comprising a panel (9) forming the vertical limit between a protected zone (10) of the boot (2) used to receive the objects (7) and accessible when the boot (2) is open from the rear forward, and a second zone (11) of the boot (2) used to receive the roof (1) in the folded, stored position and located above the protected zone (10), the panel (9) being moveable between at least a low protecting position in which the protected zone (10) fills a first volume which is free when the boot (2) is closed and the roof (1) is in its folded, stored position, and a high protecting position in which the protected zone (10) fills a second volume which is free when the boot (2) is closed and the roof (1) is in its deployed position, first (12) and second (13) securing means being used to respectively lock the panel (9) in its low protecting position and in its high protecting position, the panel (9) in the low protecting position being used to co-operate with a first sensor (14) so as to authorise the folding of the roof (1), wherein the co-operation of the panel (9) with the first sensor (14) is such that, when the panel (9) is higher than the low protecting position, the roof (1) can not be folded, and in that the co-operation of the panel (9) with a second sensor (15) is such that, when the panel (9) is higher than the high protecting position, the boot (2) can not be closed.

2. Device (8) set forth in claim 1, wherein an arm (16) is attached to each lateral side of the panel (9) in a movable manner in the transversal direction to the vehicle, each arm (16) comprising a stub (17) projecting transversally towards the outside of the protected zone (10), an anchorage element (19) integral with the body (6) comprises a first opening (18) in which the first sensor (14) is housed, the stub (17) being used to penetrate into the first opening (18) in order to lock the panel (9) in its low protecting position and to actuate the first sensor (14).

3. Device set forth in claim 2, wherein each stub (17) at the lower end of the corresponding arm (16), which extends towards the bottom of the boot (2) and which is attached in a flexible manner to the panel (9), is constantly solicited in the direction of the corresponding anchorage element (19).

4. Device set forth in claim 2 or 3, wherein each anchorage element (19) comprises a second opening (20) in which the second sensor (15) is housed, the stub (17) being used to penetrate into the second opening (20) in order to lock the panel (9) in its high protecting position and to actuate the second sensor (15).

5. Protective device set forth in one of claims 1 to 4, wherein, when the roof (1) is in its deployed position and the boot (2) is open from the rear forward, the panel (9) can be placed in a high introductory position above the high protecting position so as to facilitate the placing of luggage (7) in the protected zone (10).

6. Protective device set forth in claim 5, wherein third securing means (21) are used to lock the panel (9) in its high introductory position.

7. Device set forth in claim 6 dependent on claim 2, wherein the anchorage element (19) comprises a third opening (22) in which the stub (17) is used to penetrate in order to lock the panel (9) in its high introductory position.

8. Protective device set forth in one of claims 1 to 7, the vehicle being fitted with a device used to facilitate the placing of objects (7) under the roof (1) by guiding it from its folded, stored position to a folded, raised position in which the boot (2) is open from the rear forward and the roof (1) at least partially projecting out of the boot (2), wherein, when the roof (1) is in its folded, raised position and the boot (2) is open from the rear forward, the panel (9) can be moved into a low introductory position beyond the low protecting position so as to facilitate the placing of luggage (7) in the protected zone (10), the co-operation of the panel (9) with the first sensor (14) being such that, when the panel (9)is higher than the low protecting position, the roof (1) can not be lowered and the boot (2) can not be closed.

9. Device set forth in claim 8, wherein fourth securing means (23) are used to lock the panel (9) in its low introductory position.

10. Device set forth in claim 9 dependent on claim 2, wherein the anchorage element (19) comprises a fourth opening (24) in which the stub (17) is used to penetrate in order to lock the panel (9) in its low introductory position.

## Patentansprüche

1. Schutzvorrichtung (8) für Gegenstände (7), die im heckseitigen Kofferraum (2) eines Kraftfahrzeugs angeordnet sind, welches ein faltbares Dach (1) aufweist, das zwischen einer entfalteten Position, in welcher dieses die Fahrgastzelle des Fahrzeugs überdeckt, und einer ordentlich gefalteten Position, in welcher dieses in dem durch eine Haube (5) geschlossenen Kofferraum (2) angeordnet und weg geräumt ist, beweglich ist, wobei die Vorrichtung (8) ein Schild (9) aufweist, welches die vertikale Grenze ist zwischen einer geschützten Region (10) des Kofferraumes (2), die so ausgebildet ist, dass sie Gegenstände (7) aufnehmen kann und zugänglich ist, wenn der Kofferraum (2) von hinten nach vorne geöffnet wird, und einer zweiten Region (11) des Kofferraumes (2), die so ausgebildet ist, dass sie das Dach (1) in der ordentlich gefalteten Position und über der geschützten Region (10) liegend aufnehmen kann, wobei das Schild (9) zwischen wenigstens einer tiefen Schutzposition, in welcher die geschützte Region (10) ein erstes Volumen einnimmt, das verfügbar ist, wenn der Kofferraum (2) geschlossen ist und sich das Dach (1) in seiner ordentlich gefalteten Position befindet, und einer hohen Schutzposition, in welcher die geschützte Region (10) ein zweites Volumen einnimmt, das verfügbar ist, wenn der Kofferraum (2) geschlossen ist und sich das Dach (1) in seiner entfalteten Position befindet, verschiebbar ist, wobei erste (12) und zweite (13) Verriegelungsmittel so ausgebildet sind, dass sie das Schild (9) in seiner tiefen Schutzposition bzw. in seiner hohen Schutzposition verriegeln, wobei das Schild (9) in der tiefen Schutzposition so ausgebildet ist, dass dieses mit einem ersten Sensor (14) zusammenwirkt, derart, dass die Faltung des Dachs (1) zugelassen wird, **dadurch gekennzeichnet, dass** das Zusammenwirken des Schildes (9) mit dem ersten Sensor (14) derart erfolgt, dass, wenn das Schild (9) viel höher als die tiefe Schutzposition liegt, das Dach (1) nicht gefaltet werden kann, und dass die Zusammenwirkung des Schildes (9) mit dem zweiten Sensor (15) derart ist, dass, wenn das Schild (9) viel höher als die hohe Schutzposition liegt, der Kofferraum (2) nicht geschlossen werden kann.

2. Vorrichtung (8) nach Anspruch 1, **dadurch gekennzeichnet, dass** ein Arm (16) an jedem Seitenrand des Schildes (9) in der Querrichtung des Fahrzeugs beweglich befestigt ist, wobei jeder Arm (16) eine Nase (17) aufweist, die quer in Richtung nach außen von der geschützten Region (10) vorsteht, ein Verankerungselement (19), das mit der Karosserie (6) fest verbunden ist, eine erste Öffnung (18) aufweist, in welcher der erste Sensor (14) aufgenommen ist, wobei die Nase (17) so ausgebildet ist, dass sie in die erste Öffnung (18) hineinragen kann, um so das Schild (9) in seiner tiefen Schutzposition zu verriegeln und den ersten Sensor (14) zu betätigen.

3. Vorrichtung nach Anspruch 2, **dadurch gekennzeichnet, dass** jede Nase (17), die am entsprechenden unteren Ende des Arms (16) liegt, der sich in Richtung der Tiefe des Kofferraums (2) erstreckt und der flexibel am Schild (9) befestigt ist, dauerhaft in Richtung des Verankerungselements (19) belastet ist.

4. Vorrichtung nach Anspruch 2 oder 3, **dadurch gekennzeichnet, dass** das Verankerungselement (19) eine zweite Öffnung (20) umfasst, in welcher der zweite Sensor (15) aufgenommen ist, wobei die Nase (17) so ausgebildet ist, dass sie in die zweite Öffnung (20) hinein ragen kann, um so das Schild (9) in seiner hohen Schutzposition zu verriegeln und den zweiten Sensor (15) zu betätigen.

5. Schutzvorrichtung nach einem der Ansprüche 1 bis 4, **dadurch gekennzeichnet, dass**, wenn sich das Dach (1) in seiner entfalteten Position befindet und der Kofferraum (2) von hinten nach vorne geöffnet wird, das Schild (9) in eine hohe Einführposition verschoben werden kann, die über der hohen Schutzposition liegt, um so die Einführung von Gepäck (7) in die Schutzregion (10) zu erleichtern.

6. Schutzvorrichtung nach Anspruch 5, **dadurch gekennzeichnet, dass** dritte Verriegelungsmittel (21) ausgebildet sind, um das Schild (9) in seiner hohen Einführposition zu verriegeln.

7. Vorrichtung nach Anspruch 6 in Abhängigkeit von Anspruch 2, **dadurch gekennzeichnet, dass** das Verankerungselement (19) eine dritte Öffnung (22) umfasst, in welche die Nase (17) hinein ragen kann, um so das Schild (9) in seine hohen Einführposition zu verriegeln.

8. Schutzvorrichtung nach einem der Ansprüche 1 bis 7, wobei das Fahrzeug mit einer Vorrichtung versehen ist, die dazu ausgebildet ist, die Einführung von Gegenständen (7) unter das Dach (1) zu erleichtern, indem dieses aus seiner ordentlich gefalteten Position in eine höher liegende gefaltete Position mitgenommen wird, in welcher der Kofferraum (2) von hinten nach vorne geöffnet wird und das Dach (1) wenigstens teilweise über den Kofferraum (2) vorsteht, **dadurch gekennzeichnet, dass**, wenn sich das Dach (1) in seiner höher liegenden gefalteten Position befindet und der Kofferraum (2) von hinten nach vorne geöffnet wird, das Schild (9) in eine tiefe Einführposition verschoben werden kann, die über der tiefen Schutzposition liegt, um so die Einführung von Gepäck (7) in die geschützte Region (10) zu erleichtem, wobei das Zusammenwirken des Schildes (9) mit dem ersten Sensor (14) derart erfolgt, dass, wenn das Schild (9) viel höher liegt als die tiefe Schutzposition, das Dach (1) nicht abgesenkt werden kann und die Haube (2) nicht geschlossen werden kann.

9. Vorrichtung nach Anspruch 8, **dadurch gekennzeichnet, dass** vierte Verriegelungsmittel (23) ausgebildet sind, um das Schild (9) in seiner tiefen Einführposition zu verriegeln.

10. Vorrichtung nach Anspruch 9 in Abhängigkeit von Anspruch 2, **dadurch gekennzeichnet, dass** das Verankerungselement (19) eine vierte Öffnung (24) umfasst, in welche die Nase (17) hinein ragen kann, um so das Schild (9) in seiner tiefen Einführposition zu verriegeln.
